# EUROPEAN PATENT APPLICATION

(11) **EP 3 309 943 A1**
(43) Date of publication of application: **18.04.2018**
(21) Application number: 15894622.8
(22) Date of filing: 11.06.2015
(51) Int. Cl.: H02K 41/02

(54) **ELECTROMAGNETIC DEVICE**

(71) Applicant: Yuzen Sustainable Energy Co., Ltd., Taichung City 414 (TW)
(72) Inventor: HSU, Yungshun, Taichung City 414 (TW); HSU, Mingchun, Taichung City 414 (TW); HSU, Wenyu, Taichung City 414 (TW)
(74) Representative: Horak, Michael
(86) International application number: PCT/CN2015/081219
(87) International publication number: WO 2016/197352

(57) **Abstract**

An electromagnetic device is provided to overcome loss of kinetic energy caused by amplification of magnetic attraction under loading. The electromagnetic device includes a stator and a rotor that are movable relative to each other. A movement direction of the rotor is in parallel with magnetic field lines to generate dual magnetic attraction points. A magnetic conductance body (21) of a conductive coil assembly (20) that serves as a stator or a rotor has two ends of which one that is favorable to a forward direction of movement is provided with a diameter-enlarged magnetic yoke (25), so that the single-side-arranged magnetic yoke can break the balance of amplified magnetic attraction to thereby making amplification of a horizontal component of force, reducing kinetic loos, and thus improving energy conversion rate.

## Description

### (a) Technical Field of the Invention

The present invention generally relates to the field of electromagnetic technology, and more particularly to an electromagnetic device that is capable of quickly breaking the balance of amplified magnetic attraction in order to enhance magnetic assisting force in the forward direction of movement and reduce loss of kinetic energy caused by amplification of magnetic attraction under a loaded condition to thereby increase energy conversion rate thereof.

### (b) Description of the Prior Art

It is known that a common electromagnetic device is constructed according to Fleming's right hand rule and is generally a group of which a relative movement is conducted and magnetic field lines are in a perpendicular condition. The electromagnetic device comprises at least one magnet assembly and at least one conductive coil assembly opposite to each other and respectively defined as a rotor and a stator, so that the conductive coil assembly generates a voltage due to cutting of the magnetic field lines and thus achieving the purpose of electricity power generation.

The conductive coil assembly, once connected to loading, would generate eclectic current and electromagnetism according Ampere's right-hand rule and make the conductive coil assembly generate magnetism. Since the magnetic field lines of a magnet assembly that passes through the conductive coil assembly are perpendicular to and intersecting the movement direction so that the amplified magnetic attraction is in a single attraction point in a vertical condition, whereby the amplified magnetic attraction may easily cause a strong attraction condition and the vertical force component is great, this being adverse to a horizontal movement direction so as to generate an effect of hindering forward movement. Further, due to being single attraction point, loss of kinematic may result from larger amplification of magnetic attraction under loading.

In case of loss of kinetic energy, an input power of the rotor of the electromagnetic device in operation must be increased, making it not possible to meet the need for micro power generation, and the operation speed is also reduced as being affected by the loss of kinetic energy resulting from amplification of magnetic attraction, thereby affecting energy conversion rate.

In other words, it is believed the loss of kinetic energy resulting from amplification of magnetic attraction can be reduced through quickly breaking a balance condition of the amplification of magnetic attraction and increasing forward magnetic assisting force in the movement direction so as to heighten the energy conversion rate. This purpose is one to be developed in this industry.

In view of this, the present inventor has studied the issues of applications of an existing electromagnetic device discussed above and is actively searching for a solution based on years' experience of development and research in related businesses so that with repeated study and trials, an electromagnetic device that helps increase energy conversion rate so as to overcome the inconvenience and troubles caused by loss of kinetic energy resulting from amplification of magnetic attraction.

### SUMMARY OF THE INVENTION

Thus, the primary objective of the present invention is to provide an electromagnetic device that can quickly break balance of amplified magnetic attraction so as to generate an effect of driving with a minute force to reduce loss of kinetic energy and thus improve energy conversion rate.

Another objective of the present invention is to provide an electromagnetic device that helps improve a forward magnetic assisting force during a movement so that dual magnetic attraction points can be used to amplify a force component in the movement direction to thereby increase kinetic energy and further improve energy conversion rate thereof.

In view of these, the present invention uses the following technical solution to achieve the above objectives and effectiveness thereof.

An electromagnetic device is provided. The electromagnetic device comprises a magnet assembly that is defined as a rotor and at least one conductive coil assembly that is defined as a stator;
wherein the magnet assembly comprises at least one magnetic member such that adjacent magnetic members are arranged in cascade with identical poles thereof acing each other, each magnetic member having two magnetic poles that are in parallel with a movement direction of the magnet assembly that serves as the rotor, each conductive coil assembly comprising a magnetic conductance body, the magnetic conductance body being externally wound around with a coil, winding turns of the coil on the magnetic conductance body being arranged in an extension direction in parallel with the movement direction of the magnet assembly that serves as the rotor, the magnetic conductance body of each conductive coil assembly having an end that is opposite to the movement direction of the magnet assembly and is provided with a magnetic yoke.

An electromagnetic device is provided. The electromagnetic device comprises a magnet assembly that is defined as a stator and at least one conductive coil assembly that is defined as a rotor;
wherein the magnet assembly comprises at least one magnetic member such that adjacent magnetic members are arranged in cascade with identical poles thereof acing each other, each magnetic member having two magnetic poles that are in parallel with a movement direction of the conductive coil assembly that serves as the rotor, each conductive coil assembly comprising a magnetic conductance body, the magnetic conductance body being externally wound around with a coil, winding turns of the coil on the magnetic conductance body being arranged in an extension direction in parallel with the movement direction of the conductive coil assembly that serves as the rotor, the magnetic conductance body of each conductive coil assembly having an end that is opposite to the movement direction of the conductive coil assembly and is provided with a magnetic yoke.

Further, the magnet assembly and the conductive coil assembly undergo a relative movement hat is a rotary motion.

Further, the magnet assembly and the conductive coil assembly undergo a relative movement hat is a linear motion. As such, through deployment of the above technical solution, the present invention provides that dual magnetic attraction points are generated through the magnetic field lines of the magnetic member of the magnet assembly and the direction in which the coil of the conductive coil assembly is arranged being set parallel to the movement direction and also, with the structural arrangement that a diameter-enlarged magnetic yoke is provided at one end of the magnetic conductance body of the conductive coil assembly, the diameter-enlarged magnetic yoke can be used to break the balance between the amplified magnetic attraction forces at two ends. As such, a horizontal force component can be amplified to effectively reduce loss of kinetic energy, and thus, an effect of driving with a micro force can be achieved to also amplify a force component in the movement direction to increase the kinetic energy thereof, and to effectively generate a large current under inertial acceleration to provide an effect of increase the amount of electricity generated and to further increase energy conversion rate thereby greatly heightening added value thereof and increasing economic value thereof.

To allow Examiner to further understand the structure, the features, and other objectives of the present invention, preferred embodiments of the present invention are provided below, which will be described in detail, with reference to the drawings, so as to allow those skilled in the technical field to practice the present invention.

### BRIEF DESCRIPTION OF THE DRAWINGS

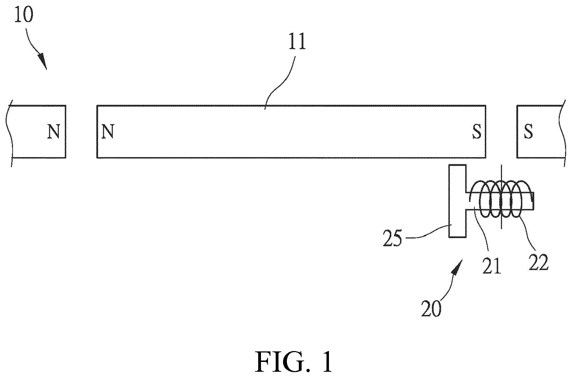

FIG. 1 is a schematic view illustrating a structural arrangement of an electromagnetic device according to the present invention;
FIGS. 2A-2C are schematic views illustrating an operation of the electromagnetic device according to the present invention, in which a magnet assembly is used as a rotor for demonstrating a condition in which the magnet assembly moves from S pole toward N pole;
FIGS. 3A-3C are schematic views illustrating an operation of the electromagnetic device according to the present invention, in which a magnet assembly is used as a rotor for demonstrating a condition in which the magnet assembly moves from N pole toward S pole;
FIGS. 4A-4C are schematic views illustrating an operation of the electromagnetic device according to the present invention, in which a conductive coil assembly is used as a rotor for demonstrating a condition in which the magnet assembly moves from N pole toward S pole; and
FIGS. 5A-5C are schematic views illustrating an operation of the electromagnetic device according to the present invention, in which a conductive coil assembly is used as a rotor for demonstrating a condition in which the magnet assembly moves from S pole toward N pole.

### DETAILED DESCRIPTION OF THE PREFERRED EMBODIMENTS

The present invention relates to an electromagnetic device. In embodiments of the present invention, as well as components and parts thereof, shown as examples in the drawings, all references made to front and rear, left and right, top and bottom, upper and lower, and horizontal and vertical are used for easing and simplifying the description and are not intended to limit the present invention, nor are they intended to constrain the components at any position or in any spatial direction. Sizes that are indicated in the drawings and the disclosure can be varied according to designs and requirements of the embodiments of the present invention without departing the scope defined by the appended claims of the present invention.

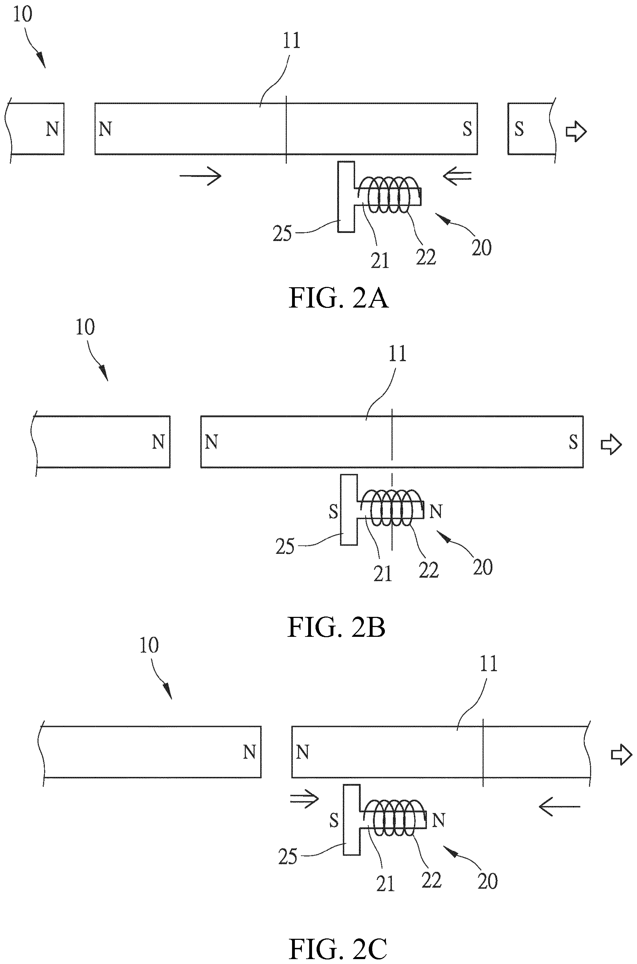

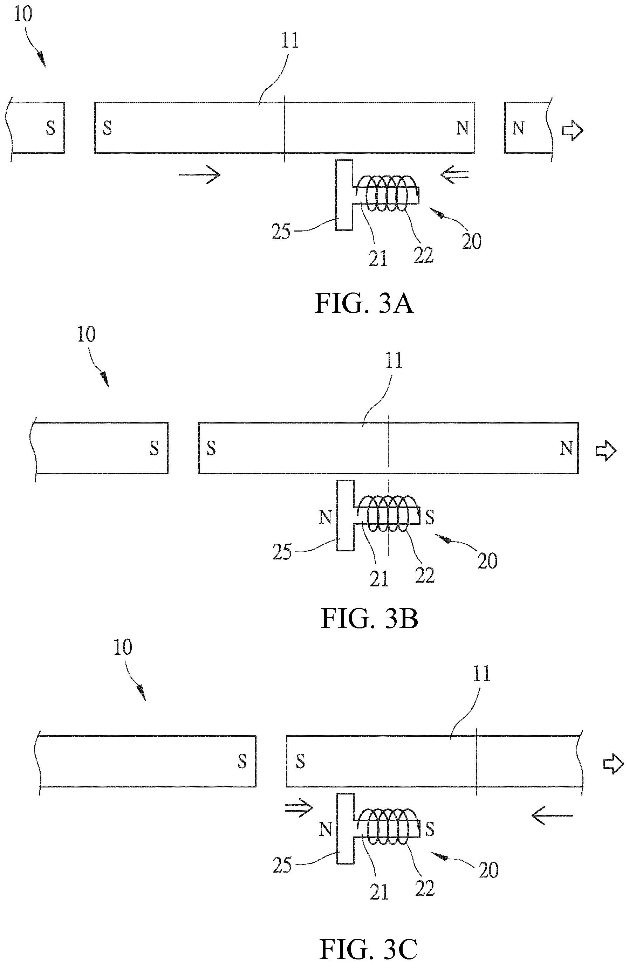

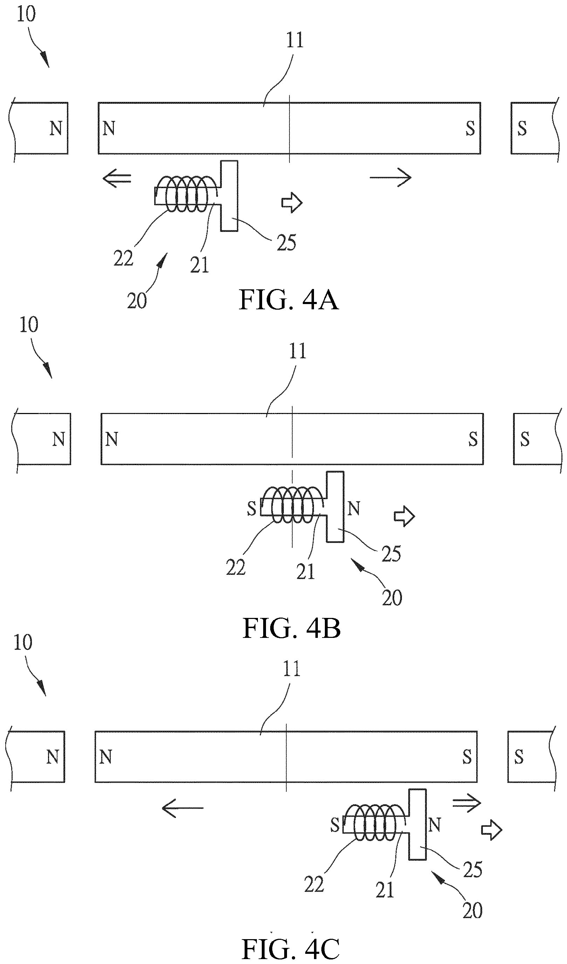

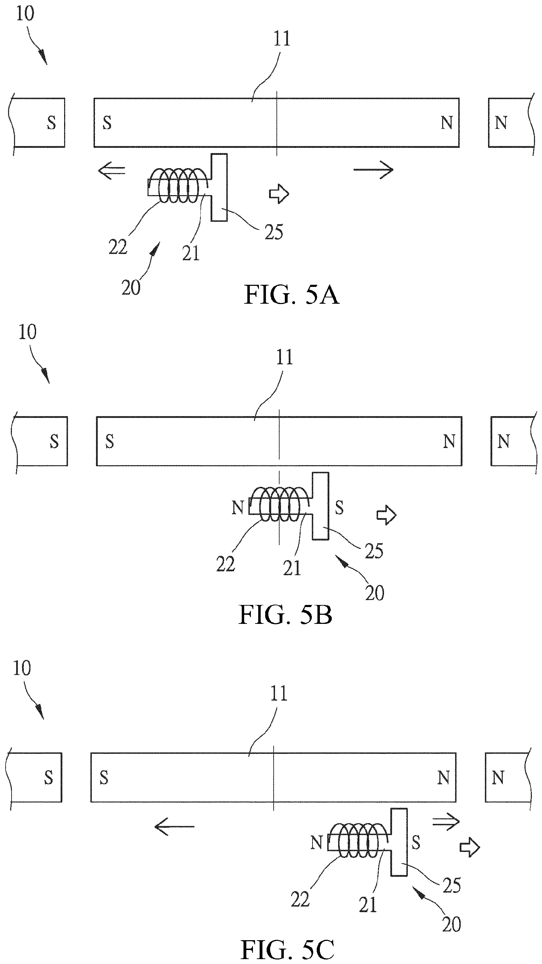

The present invention is characterized in that the magnet assembly 10 is made up of at least one magnetic member 11 and adjacent ones of the magnetic members 11 are arranged in cascade with identical magnetic poles thereof facing each other, and the two magnetic poles (N pole and S pole) of each magnetic member 11 are in parallel with a movement direction of the magnet assembly 10 or the conductive coil assembly 20 that is defined as the rotor. Further, each conductive coil assembly 20 comprises a magnetic conductance body 21, and the magnetic conductance body 21 is wound, on the external thereof, with a coil 22. Winding turns of the coil 22 on the magnetic conductance body 21 are arranged in an extension direction in parallel with the movement direction of the magnet assembly 10 or the conductive coil assembly 20 that is defined as the rotor. Further, the magnetic conductance body 21 of each conductive coil assembly 20 is provided, on one end thereof that may generate a magnetic assisting force in the movement direction, with a diameter-enlarged magnetic yoke 25. For example, when the magnet assembly 10 serves as the rotor and the conductive coil assembly 20 works as the stator, the magnetic yoke 25 is arranged at one end of the magnetic conductance body 21 that is opposite to the movement direction of the magnet assembly 10 (as shown in FIGS. 2A-2C and 3A-3C) to allow the conductive coil assembly 20, which is stationary, to increase an acting force that attracts the magnet assembly 10 to move. Oppositely, when the conductive coil assembly 20 serves as the rotor and the magnet assembly 10 works as the stator, the magnetic yoke 25 is arranged at the end of the magnetic conductance body 21 that is in the movement direction of the conductive coil assembly 20 (as shown in FIGS. 4A-4C and 5A-5C) to allow the magnet assembly 10, which is stationary, to increase an acting force that attracts the conductive coil assembly 20 to move.

As such, an electromagnetic device that increases a forward magnetic assisting force and reduces loss of kinetic energy.

In a practical operation of the electromagnetic device according to the present invention, firstly, the magnet assembly 10 being defined as the rotor and the conductive coil assembly 20 being the stator is taken as an example. Referring to FIGS. 2A-2C and 3A-3C, when the magnet assembly 10 is moved relative to the conductive coil assembly 20, in a condition that one of the magnetic members 11 is moved, with the S pole thereof toward the N pole of the magnetic member 11, the magnetic field lines of the magnetic member 11 of the magnet assembly 10 are parallel to the movement direction so as to generate dual magnetic attraction points with respect to the conductive coil assembly 20 (as shown in FIG. 2A) and under this condition, if the conductive coil assembly 20 is connected to loading, then the magnet assembly 10 is such that, in the forward direction of movement, an opposite-direction force generated through amplification of magnetic attraction is greater than a forward-direction force so that the coil 22 of the conductive coil assembly 20 is not connected to the loading at this time, and due to the inclusion of dual magnetic attraction points, when the amplified magnetic attraction forces at two ends are in balance, as shown in FIG. 2B, the magnet assembly 10 is in a zero torque condition and is not affected by the magnetic attraction. When the coil 22 of the conductive coil assembly 20 is connected to loading, as shown in FIG. 2C, since the magnetic conductance body 21 of the conductive coil assembly 20 is provided with a diameter-enlarged magnetic yoke 25 at the end that is opposite to the movement direction of the magnet assembly 10, the magnet assembly 10 is such that, in the forward direction of movement, a forward-direction force generated through amplification of magnetic attraction is greater than the opposite-direction force, so that the magnetic yoke 25 of the magnetic conductance body 21 of the conductive coil assembly 20 quickly breaks the amplified magnetic attraction balance relationship to make the magnet assembly 10 driven to move quickly, increasing the magnetic assisting force for the magnet assembly 10 to move forward in the movement direction.

Further, when the magnetic member 11 is moved, with the N pole thereof toward the S pole of the magnetic member 11, as shown in FIG. 3A-3C, the magnetic field lines of the magnetic member 11 of the magnet assembly 10 are parallel to the movement direction so as to generate dual magnetic attraction points with respect to the conductive coil assembly 20 (as shown in FIG. 3A) and under this condition, if the conductive coil assembly 20 is connected loading, then in the forward direction of movement, the magnet assembly 10 is such that an opposite-direction force generated through amplification of magnetic attraction is greater than a forward-direction force so that the coil 22 of the conductive coil assembly 20 is not connected to the loading at this time and due to the inclusion of dual magnetic attraction points, when the amplified magnetic attraction forces at two ends are in balance, as shown in FIG. 3B, the magnet assembly 10 is in a zero torque condition and is not affected by the magnetic attraction. When the coil 22 of the conductive coil assembly 20 is connected to loading, as shown in FIG. 3C, since the magnetic conductance body 21 of the conductive coil assembly 20 is provided with a diameter-enlarged magnetic yoke 25 at the end that is opposite to the movement direction of the magnet assembly 10, the magnet assembly 10 is such that, in the forward direction of movement, a forward-direction force generated through amplification of magnetic attraction is greater than the opposite-direction force, so that the magnetic yoke 25 of the magnetic conductance body 21 of the conductive coil assembly 20 quickly breaks the amplified magnetic attraction balance relationship to similarly make the magnet assembly 10 driven to move quickly, increasing the magnetic assisting force for the magnet assembly 10 to move forward in the movement direction.

Further, in a practical operation of the electromagnetic device according to the present invention where the magnet assembly 10 serves as the stator and the conductive coil assembly 20 works as the rotor, referring to FIGS. 4A-4C and 5A-5C, when the conductive coil assembly 20 is moved relative to the magnet assembly 10, in a condition that the conductive coil assembly 20 is moved from the N pole of one magnetic member 11 toward the S pole of the magnetic member 11, the magnetic field lines of the magnetic member 11 of the magnet assembly 10 are parallel to the movement direction so as to generate dual magnetic attraction points with respect to the conductive coil assembly 20 (as shown in FIG. 4A) and under this condition, if the conductive coil assembly 20 is connected to loading, then the conductive coil assembly 20 is such that, in the forward direction of movement, an opposite-direction force generated through amplification of magnetic attraction is greater than a forward-direction force so that the coil 22 of the conductive coil assembly 20 is not connected to the loading, and due to the inclusion of dual magnetic attraction points, when the amplified magnetic attraction forces at two ends are in balance, as shown in FIG. 4B, the conductive coil assembly 20 is in a zero torque condition and is not affected by the magnetic attraction. When the coil 22 of the conductive coil assembly 20 is connected to loading, as shown in FIG. 4C, since the magnetic conductance body 21 of the conductive coil assembly 20 is provided with a diameter-enlarged magnetic yoke 25 at the end that is opposite to the movement direction of the conductive coil assembly, the conductive coil assembly 20 is such that, in the forward direction of movement, a forward-direction force generated through amplification of magnetic attraction is greater than the opposite-direction force, so that the magnetic yoke 25 of the magnetic conductance body 21 of the conductive coil assembly 20 quickly breaks the amplified magnetic attraction balance relationship to make the conductive coil assembly 20 driven to move quickly, increasing the magnetic assisting force for the conductive coil assembly 20 to move forward in the movement direction.

Further, when the conductive coil assembly 20 is moved from the S pole of the magnetic member 11 of the magnet assembly 10 toward the N pole of the magnetic member 11, as shown in FIG. 5A-5C, the magnetic field lines of the magnetic member 11 of the magnet assembly 10 are parallel to the movement direction so as to generate dual magnetic attraction points with respect to the conductive coil assembly 20 (as shown in FIG. 5A) and under this condition, if the conductive coil assembly 20 is connected to loading, then the conductive coil assembly 20 is such that, in the forward direction of movement, an opposite-direction force generated through amplification of magnetic attraction is greater than a forward-direction force so that the coil 22 of the conductive coil assembly 20 is not connected to the loading at this time, and due to the inclusion of dual magnetic attraction points, when the amplified magnetic attraction forces at two ends are in balance, as shown in FIG. 5B, the conductive coil assembly 20 is in a zero torque condition and is not affected by the magnetic attraction. When the coil 22 of the conductive coil assembly 20 is connected to loading, as shown in FIG. 5C, since the magnetic conductance body 21 of the conductive coil assembly 20 is provided with a diameter-enlarged magnetic yoke 25 at the end that is opposite to the movement direction of the conductive coil assembly 20, the conductive coil assembly 20 is such that, in the forward direction of movement, a forward-direction force generated through amplification of magnetic attraction is greater than the opposite-direction force, so that the magnetic yoke 25 of the magnetic conductance body 21 of the conductive coil assembly 20 quickly breaks the amplified magnetic attraction balance relationship to similarly make the conductive coil assembly 20 driven to move quickly, increasing the magnetic assisting force for the conductive coil assembly 20 to move forward in the movement direction.

In summary, by having the magnetic field lines of the magnetic member 11 of the magnet assembly 10 and a direction in which the coil 22 of the conductive coil assembly 20 is arranged are both parallel to the movement direction, dual magnetic attraction points are generated. Further, with the structural arrangement that the diameter-enlarged magnetic yoke 25 is provided at one end of the magnetic conductance body 21 of the conductive coil assembly 20, the diameter-enlarged magnetic yoke 25 can break the balance between the amplified magnetic attraction forces at the two ends. As such, horizontal force component can be amplified to effectively reduce loss and provide an effect of micro force driving, and at the same time amplifying a force component in the movement direction to increase the kinetic energy thereof, and to effectively generate a large current under inertial acceleration to thereby achieve an effect of increase the electrical power generated and thus further improving energy conversion efficiency.

The embodiments described above and the drawings are not provided to constrain product configuration and type associated with the present invention and any variation or modification achieved with those having ordinary skills in the art is considered fully within the scope of patent protection of this invention.

## Claims

1. An electromagnetic device, the electromagnetic device comprising a magnet assembly (10) that is defined as a rotor and at least one conductive coil assembly (20) that is defined as a stator,
**characterized in that** the magnet assembly (10) comprises at least one magnetic member (11) such that adjacent magnetic members (11) are arranged in cascade with identical poles thereof acing each other, each magnetic member (11) having two magnetic poles that are in parallel with a movement direction of the magnet assembly (10) that serves as the rotor, each conductive coil assembly (20) comprising a magnetic conductance body (21), the magnetic conductance body (21) being externally wound around with a coil (22), winding turns of the coil (22) on the magnetic conductance body (21) being arranged in an extension direction in parallel with the movement direction of the magnet assembly (10) that serves as the rotor, the magnetic conductance body (21) of each conductive coil assembly (20) having an end that is opposite to the movement direction of the magnet assembly (10) and is provided with a magnetic yoke (25).

2. An electromagnetic device, the electromagnetic device comprising a magnet assembly (10) that is defined as a stator and at least one conductive coil assembly (20) that is defined as a rotor,
**characterized in that** the magnet assembly (10) comprises at least one magnetic member (11) such that adjacent magnetic members (11) are arranged in cascade with identical poles thereof acing each other, each magnetic member (11) having two magnetic poles that are in parallel with a movement direction of the conductive coil assembly (20) that serves as the rotor, each conductive coil assembly (20) comprising a magnetic conductance body (21), the magnetic conductance body (21) being externally wound around with a coil (22), winding turns of the coil (22) on the magnetic conductance body (21) being arranged in an extension direction in parallel with the movement direction of the conductive coil assembly (20) that serves as the rotor, the magnetic conductance body (21) of each conductive coil assembly (20) having an end that is opposite to the movement direction of the conductive coil assembly (20) and is provided with a magnetic yoke (25).

3. The electromagnetic device according to claim 1 or 2, **characterized in that** the magnet assembly (10) and the conductive coil assembly (20) undergo a relative movement hat is a rotary motion.

4. The electromagnetic device according to claim 1 or 2, **characterized in that** the magnet assembly (10) and the conductive coil assembly (20) undergo a relative movement hat is a linear motion.
